# EUROPÄISCHE PATENTANMELDUNG

(11) **EP 0 913 604 A1**
(43) Veröffentlichungstag der Anmeldung: **06.05.1999**
(21) Anmeldenummer: 98117547.4
(22) Anmeldetag: 16.09.1998
(51) Int. Cl.: F16H 63/38

(54) **Blattfederrastierung für Schaltgetriebe**

(30) Priorität: 30.10.1997 DE 19747954
(71) Anmelder: Bayerische Motoren Werke Aktiengesellschaft, 80788 München (DE)
(72) Erfinder: Wagner, Norbert, 81549 München (DE); Esser, Peter-Josef, 82229 Seefeld (DE); Rastinger, Bernard, 81249 München (DE)

(57) **Zusammenfassung**

Es wird eine Schalteinrichtung für ein handgeschaltetes Kraftfahrzeuggetriebe beschrieben, bei der die verwendeten Schaltelemente Schaltwelle (1), Schaltstange (9,10,11) und/oder Schaltschwinge durch mindestens eine Rasteinrichtung in mindestens zwei verschiedenen Stellungen festgelegt werden können, indem ein in der Schalteinrichtung gelagertes Rastmittel (8) unter Belastung einer Feder (2,7) in eine der jeweiligen Stellung entsprechende Ausnehmung (5) des Schaltelementes hineinragt. Die Feder wird dabei durch eine Blattfeder gebildet.

## Beschreibung

Die Erfindung betrifft eine Schalteinrichtung für ein handgeschaltetes Kraftfahrzeuggetriebe nach dem Oberbegriff des Hauptanspruchs.

Bei handgeschalteten Kraftfahrzeuggetrieben werden die Synchroneinheiten zum Einlegen der anderen Fahrstufen über mindestens eine Schaltwelle und Schaltstangen oder Schaltschwingen betätigt. In der Schalteinrichtung, in der Schaltwellen, Schaltschwingen und/oder Schaltstangen gelagert sind, sind auch Rasteinrichtungen untergebracht, um bestimmte Positionen dieser Schaltelemente vorübergehend zu fixieren. Diese Rasteinrichtungen unterstützen das haptische Gefühl beim Schalten der Gänge und dienen zur Einhaltung einer definierten Schalthebelposition.

Die bekannten Rasteinrichtungen bestehen aus federbelasteten Rastmitteln, die während der Schaltbewegung an einem anderen Bauteil entlanggleiten und in Vertiefungen einrasten.

Die DE 41 18 931 A1 zeigt solche Rasteinrichtungen sowohl für die Schaltwelle, als auch für die Schaltstangen und die Schaltschwingen. Dabei dient eine über eine Feder druckbeaufschlagte Rastrolle oder Rastkugel zur Festlegung des jeweiligen Schaltelements in seinen Schaltstellungen, wobei die Rastrolle oder Rastkugel in an dem Schaltelement angebrachte Vertiefungen eingreift. Die Rasteinrichtungen sind in Gehäusebohrungen der Schalteinrichtung quer zur Bewegungsrichtung der Schaltelemente angeordnet und bestehen aus einer Schraubenfeder, die eine Kugel, einen einfachen Bolzen oder einen Rädchen- bzw. Kugelbolzen in entsprechende Vertiefungen des jeweiligen Schaltelements drückt.

Solche Rasteinrichtungen bestehen aus mehreren Bauteilen, die beim Zusammenbau der Schalteinrichtung sorgfältig eingebaut werden müssen. Außerdem besitzt die Schalteinrichtung unter Umständen eine abzudichtende Öffnung, durch die die Rasteinrichtung eingesetzt wird.

Deshalb ist es Aufgabe der Erfindung, eine Schalteinrichtung für ein handgeschaltetes Kraftfahrzeuggetriebe mit einer Rasteinrichtung bereitzustellen, die einfach und aus wenigen Teilen aufgebaut und einfach zu montieren ist.

Die Aufgabe wird erfindungsgemäß mit dem kennzeichnenden Merkmal des jeweiligen unabhängigen Anspruchs gelöst. Weitere Ausgestaltungen der Erfindung ergeben sich aus den Unteransprüchen.

Nach der Erfindung wird mindestens eine Schaltwelle und/oder mindestens eine Schaltstange und/oder mindestens eine Schaltschwinge einer Schalteinrichtung für ein handgeschaltetes Kraftfahrzeuggetriebe durch mindestens eine Rasteinrichtung in mindestens zwei verschiedenen Stellungen festgelegt, indem ein in der Schalteinrichtung gelagertes Rastmittel unter Belastung einer Feder in eine der jeweiligen Stellung entsprechende Ausnehmung des jeweiligen Schaltelements hineinragt, wobei die Feder eine Blattfeder ist.

Die Verwendung einer Blattfeder hat den Vorteil, daß die Rasteinrichtung und ihre Montage sehr einfach gestaltet und aufgebaut werden kann. Es sind weniger Teile notwendig, die Teile können flächig gestaltet werden, was ihre Handhabung vereinfacht. Außerdem sind zu ihrer Montage bzw. Lagerung keine Öffnungen im Gehäuse der Schalteinrichtung notwendig und sie benötigen keine aufwendigen Halteelemente. Eine Blattfeder kann vorteilhafterweise Querkräfte aufnehmen, deshalb sind keine Gleitbuchsen notwendig, da die geringere Reibung dadurch bereits gegeben ist.

Bei einer bevorzugten Ausführung der Erfindung bildet die Blattfeder selbst das Rastmittel. Das hat den Vorteil, daß Rast- und Spannmittel einteilig sind und nicht zusammengebaut werden müssen. Es ist nur noch nötig, die Blattfeder in der Schalteinrichtung zu fixieren.

Bei einer weiteren bevorzugten Ausführung der Erfindung ist das Rastmittel an der Blattfeder angebracht. Das verringert vorteilhafterweise, insbesondere bei der Verwendung einer Rolle als Rastmittel, die Reibung beim Schalten.

Bei einer vorteilhatten Ausführung der Erfindung besteht die Blattfeder aus einem in der Schalteinrichtung befestigten Blattfederkörper, an dem mehrere Blattfederzungen zur Festlegung mehrerer Schaltelemente ausgebildet sind. Dadurch werden vorteilhafterweise mehrere Rasteinrichtungen zu einem Bauteil zusammengefaßt, was die Montage innerhalb des Gehäuses noch weiter vereinfacht.

Bei einer weiteren vorteilhatten Ausführung der Erfindung ist in der Schalteinrichtung ein Abstützkörper ausgebildet, der als Widerlager für mindestens eine Blattfederzunge dient. Dadurch kann vorteilhafterweise der Abstützort der Blattfederzunge entsprechend bestimmter Anforderungen, zum Beispiel dem Kraftverlauf, festgelegt werden. Die Befestigung des Blattfederkörpers kann an einer konstruktiv günstigen Stelle erfolgen, die dann unabhängig von den Kräfteverhältnissen ausgewählt werden kann.

Zwei bevorzugte Ausführungsbeispiele der Erfindung sind in der nachfolgenden Beschreibung mit der zugehörigen Zeichnung dargestellt. Es zeigen:
- Figur 1: eine Schaltwellenrastierung gemäß der Erfindung und
- Figur 2: die Rastierung dreier Schaltstangen mit einer Blattfeder gemäß der Erfindung.

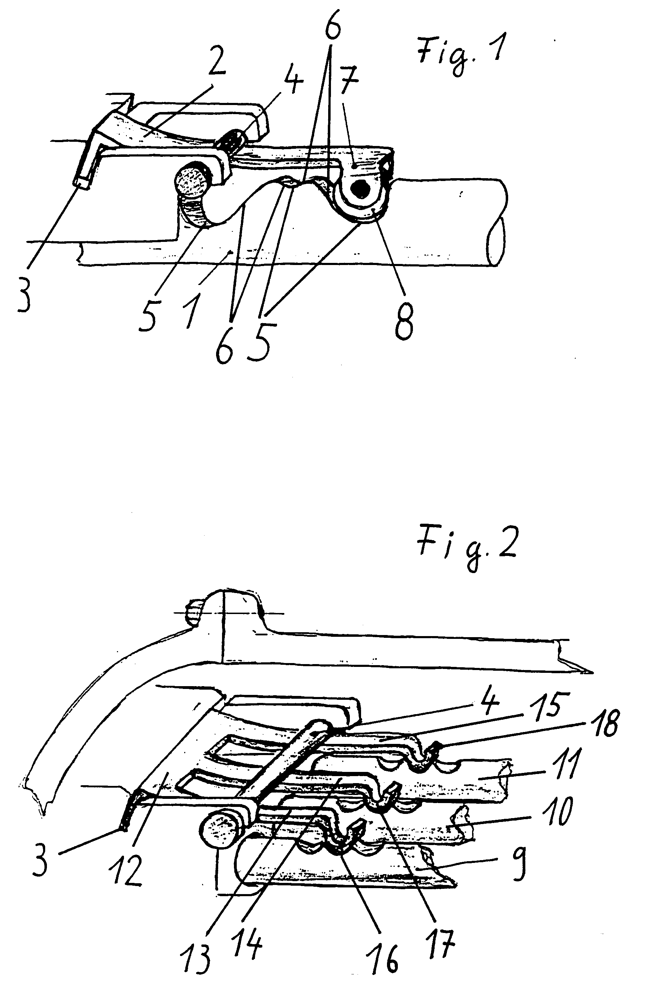

Figur 1 zeigt eine Schaltwelle 1 auf einem Teil ihrer Länge, der mit einem Rastmittel zusammenwirkt. Die Schaltwelle 1 ist längsverschiebbar in einem nicht gezeichneten Gehäuse einer Schalteinrichtung gelagert. Das Gehäuse der Schalteinrichtung besitzt eine Befestigungseinrichtung für einen Blattfederkörper 2 die aus einem Schlitz 3 und einem Abstützkörper 4 besteht, der als Stift ausgebildet ist. Die Schaltwelle 1 besitzt ein Rastprofil mit drei Vertiefungen 5 und dazwischenliegenden Anlaufschrägen 6. Wird die Schaltwelle 1 in Längsrichtung verschoben, so wälzt eine an einer Blattfederzunge 7 angebrachte Rolle 8 über das Rastprofil, wobei die Schaltwelle 1 aufgrund der Anlaufschrägen 6 durch die Spannung der Blattfeder dann fixiert wird, wenn sich die Rolle 8 in den Vertiefungen 5 befindet. Die Blattfederzunge 7 wird am Gehäuse durch den Abstützkörper 4 abgestützt und dadurch gleichzeitig mit dem Blattfederkörper 2 in dem Schlitz 3 fixiert, da sie unter Vorspannung gegenüber der Schaltwelle 1 eingebaut ist.

Figur 2 zeigt dasselbe Prinzip aus Figur 1, allerdings zur Fixierung dreier Schaltstangen 9, 10, 11 mit einer Blattfeder, bestehend aus einem Blattfederkörper 12 und drei Blattfederzungen 13, 14, 15. Entsprechend Figur 1 wird so jede der Schaltstangen 9, 10, 11 für sich in jeweils drei Stellungen festlegbar. Jeweils ein Radius 16, 17, 18 am Ende der Blattfederzungen 13, 14, 15 bildet das Rastmittel, das mit den jeweiligen Vertiefungen der Schaltstangen 9, 10, 11 in Rastverbindung tritt.

## Patentansprüche

1. Schalteinrichtung, für ein handgeschaltetes Kraftfahrzeuggetriebe, mit mindestens einer Schaltwelle (1), die durch mindestens eine Rasteinrichtung in mindestens zwei verschiedenen Stellungen festgelegt werden kann, indem ein in der Schalteinrichtung gelagertes Rastmittel unter Belastung einer Feder in eine der jeweiligen Stellung entsprechende Ausnehmung der Schaltwelle (1) hineinragt, dadurch gekennzeichnet, daß die Feder eine Blattfeder ist.

2. Schalteinrichtung, für ein handgeschaltetes Kraftfahrzeuggetriebe, mit mindestens einer Schaltstange (9,10,11), die durch mindestens eine Rasteinrichtung in mindestens zwei verschiedenen Stellungen festgelegt werden kann, indem ein in der Schalteinrichtung gelagertes Rastmittel unter Belastung einer Feder in eine der jeweiligen Stellung entsprechende Ausnehmung der Schaltstange (9,10,11) hineinragt, dadurch gekennzeichnet, daß die Feder eine Blattfeder ist.

3. Schalteinrichtung, für ein handgeschaltetes Kraftfahrzeuggetriebe, mit mindestens einer Schaltschwinge, die durch mindestens eine Rasteinrichtung in mindestens zwei verschiedenen Stellungen festgelegt werden kann, indem ein in der Schalteinrichtung gelagertes Rastmittel unter Belastung einer Feder in eine der jeweiligen Stellung entsprechende Ausnehmung der Schaltschwinge hineinragt, dadurch gekennzeichnet, daß die Feder eine Blattfeder ist.

4. Schalteinrichtung nach einem der Ansprüche 1 bis 3, dadurch gekennzeichnet, daß das Rastmittel durch die Blattfeder gebildet wird.

5. Schalteinrichtung nach einem der Ansprüche 1 bis 3, dadurch gekennzeichnet, daß das Rastmittel, insbesondere eine Rolle (8), an der Blattfeder angebracht ist.

6. Schalteinrichtung nach einem der Ansprüche 1 bis 5, dadurch gekennzeichnet, daß die Blattfeder aus einem in der Schalteinrichtung befestigten Blattfederkörper (12) besteht, der mehrere Blattfederzungen (13,14,15) besitzt, zur Festlegung mehrerer Schaltwellen (1) und/oder Schaltstangen (9,10,11) und/oder Schaltschwingen.

7. Schalteinrichtung nach einem der Ansprüche 1 bis 6, dadurch gekennzeichnet, daß in der Schalteinrichtung ein Abstützkörper (4) ausgebildet ist, der als Widerlager für mindestens eine Blattfederzunge (7) dient.
